# EUROPEAN PATENT APPLICATION

(11) **EP 1 172 039 A1**
(43) Date of publication of application: **16.01.2002**
(21) Application number: 00870160.9
(22) Date of filing: 10.07.2000
(51) Int. Cl.: A23G 3/28, A23G 7/02, A23G 3/20

(54) **Confectionery printing machine and method**

(71) Applicant: Guycobel International N.V., 3110 Rotselar (BE)
(72) Inventor: Coppens, Guido, 3220 Holsbeek (BE)
(74) Representative: Bird, William Edward

(57) **Abstract**

The present invention provides a method and an apparatus for printing confectionery products using a printing machine having at least a first and a second printing station and a third station; the method comprising the steps of: sequentially conveying a first mould portion (15,45) from the first printing station (1) to the second printing station (3) and then to the third station; printing onto the mould portion at each printing station; drying or solidifying the printing on the mould portion downstream of the first and second printing stations, respectively; and independently setting the speed of conveyance so that the time taken to convey the first mould portion from the first printing station to the second printing station and from the second printing station to the third station is at least sufficient to dry or solidify the printing applied at the first and second printing stations, respectively.

Preferably, each first mould portion is finely adjusted at each printing head using an X-Y locator, the positioning being independent of the conveying devices upstream and downstream of it.

## Description

This invention relates to a method and a machine for preparing confectionery products printed with an ink such as a non-toxic or an edible ink, in particular printed chocolates, biscuits, cakes, etc. The method and machine are particularly useful for printing multi-coloured images.

### TECHNICAL BACKGROUND

Several different techniques are known for printing confectionery products which can be divided into two groups, i.e. direct and indirect or offset printing techniques. With direct printing, the ink is applied directly to the product, e.g. by ink jet printing or screen printing. According to the indirect printing techniques, an ink is applied according to a certain pattern to a first object and then transferred from this object to the confectionery item. An example of this type of printing is application of an ink pattern to an inner wall of a mould in which the confectionery product is formed. On demoulding, this ink sticks to the confectionery product. In another technique known as dabbing the inked pattern is applied to a cliché and from there to a pad. The pad is then applied to the confectionery product thus transferring the pattern.

EP 498 357 describes a method of indirectly printing chocolate. Firstly, an image is silk screen printed onto a flat surface which will later form the bottom of a mould with a single impression. Then a bottomless mould is placed over the printed surface and molten chocolate is poured into the mould. After solidifying, the mould may be removed leaving a printed surface on the chocolate. If a multicolour print is required, the different colours are applied sequentially to the flat surface and a coagulation or drying time is allowed between each printing step before the next colour is applied. The disadvantage of this method is that it is designed for the manufacture of individual confectionery items, e.g. in a small bakery supplying individual customers with decorated products. The method is difficult to automate to provide high quality printing at high rates for various reasons. Firstly, a pause must be made after each printing step and very exact registration must be obtained between one colour and the next. The length of the pause can differ depending on the amount and type of ink which is used which also depends upon the pattern to be printed and the printed substrate.

Multi-colour screen printing machines typically have turret mounted platens which index between positions under printing heads or have a continuous web onto which platens are fixed for moving a substrate from one printing station to the next. A screen printing device for chocolate using a continuous web is known from GB 1,441,446. A continuous pad transfer printing device is known from US 4,578,273.

Further continuous web printing machines are known from GB 722,851 and US 5,534,281 and US 4,285,978. A turret based printing machine is known from US 5,834,047. All these known devices have the problem that the printing heads must keep up with the movement of the platens or, alternatively, the indexing devices must be slowed down until the slowest printing step can be carried out successfully.

An object of the present invention is to provide a printing method and printing machine which allows multi-colour printing of confectionery products of all kinds of shapes either directly or indirectly at high speed and with good quality.

It is a further object of the present invention to provide a printing machine and a printing method which allows a more economic control of printing.

### SUMMARY OF THE INVENTION

The present invention provides a method of printing confectionery products using a printing machine having at least a first and a second printing station and a third station; the method comprising the steps of: sequentially conveying a first mould portion from the first printing station to the second printing station and then to the third station; printing onto the mould portion at each printing station; drying or solidifying the printing on the mould portion downstream of the first and second printing stations, respectively; and independently setting the speed of conveyance so that the time taken to convey the first mould portion from the first printing station to the second printing station and from the second printing station to the third station is at least sufficient to dry or solidify the printing applied at the first and second printing stations, respectively.

The third station may be another printing station or another suitable processing device, e.g. an output station. Preferably, the first mould portion is printed with a plurality of similar images at each printing head simultaneously. This printing is preferably carried out by screen printing directly onto a flat plate which will form the bottom of the mould later in the process but the present invention is not limited thereto. Preferably, an X-Y locator is provided at each printing station for accurate placing and adjustment of the first mould portion with respect to the printing station, i.e. to maintain good registry between the printed layers. Preferably, each first mould portion is positionally finely adjusted at each printing head using the X-Y locator, the positioning being independent of the conveying devices upstream and downstream of the locator.

Preferably, a washing and drying station is provided at the input to the printing machine for washing and drying the first mould portions before they are conveyed one-by-one to the first printing station. Although screen printing is preferred, the ink may be transferred in an alternative embodiment using a dabbing technique particularly if the mould portion has an irregular surface, e.g. with a three-dimensional relief in the surface. An elastic pad may be used for transferring ink from an inked cliché to the first mould portion at a printing station, the elastic pad adapting itself to the surface to be printed. In embodiments according to the invention, use may be made of a pad having a smooth printing surface and of a cliché which is etched according to a predetermined image pattern. At the output station the mould may be completed by means of a second bottomless mould portion, e.g. a plate with a plurality of holes, each hole forming an individual mould cavity around a printed image when this plate is combined with the first mould portion. Subsequently, confectionery material such as chocolate is poured into each of the plurality of mould cavities and allowed to set. On removal from the mould each confectionery item is printed with a multi-coloured image of high quality.

The present invention provides a printing machine for confectionery products comprising at least a first and a second printing station and a third station; a first and second conveying device for conveying first mould portions one-by-one from the first to the second printing station, and from the second to the third station, respectively; first and second drying or solidifying sections each placed downstream of the first and second printing stations, respectively; and a control system for independently setting the speeds of the first and second conveying devices.

The third station may be a printing station or any suitable processing device such as an output station. Preferably the different coloured inks applied at the two printing stations produce a multi-coloured image. The ink used in the printing stations is preferably non-toxic, more preferably edible. More preferably there are at least three printing stations. At each station the ink is applied onto the outer surface of a first mould portion. This surface will later form an inner surface of a mould for moulding the confectionery material. This ink application is preferably carried out by screen printing directly onto a flat plate which will form the bottom of the mould later in the process but the present invention is not limited thereto. For instance, the ink may be transferred using a dabbing technique particularly if the mould portion has an irregular surface, e.g. with a three-dimensional relief in the surface. An elastic pad may be used for transferring ink from an inked cliché to the mould portion at a printing station, the elastic pad adapting itself to the surface to be printed. In embodiments according to the invention, use may be made of a pad having a smooth printing surface and of a cliché which is etched according to a predetermined pattern. A washing and dying unit is preferably placed at the input to the printing machine for washing and drying each first mould portion. A stacking system is preferably provided at the input to the machine for stacking the first mould portions in a vertical stack of horizontal first mould portions in such a way that an upper printing surface of each first mould portion is covered in a non-touching manner by the next adjacent first mould portion higher in the stack.

The present invention may also provide a method of printing confectionery products using a printing machine having at least a first and a second printing station, and a third station; the method comprising the steps of: sequentially conveying a first mould portion from the first printing station to the second printing station and then to the third station; printing onto the mould portion at each printing station; drying or solidifying the printing on the mould portion downstream of the first and second printing stations, respectively; and finely adjusting the position of the first mould portion at each printing station independently of the conveyance of the first mould portion to the next station.

The present invention provides a printing machine for confectionery products comprising at least a first and a second printing and a third station; a conveying device for conveying first mould portions one-by-one from the first to the second printing station and from the second to the third station; and a fine position adjustment mechanism at each printing station, the fine adjustment mechanism being adapted to adjust the mould portion independently of the conveying by the conveying device.

Other particularities and advantages of the method according to the invention will become apparent from the following description of a method for preparing confectionery product sprinted with an ink. This description is only given by way of example and does not limit the scope of the invention. The reference numerals relate to the annexed drawings.

### BRIEF DESCRIPTION OF THE DRAWINGS

Fig. 1 is a schematic top view of a printing machine in accordance with an embodiment of the present invention.
Figs. 2A, B and C show schematic side views of portions of the printing machine of Fig. 1.
Figs. 3A, B and C show schematic detailed top views of portions of the printing machine of Fig. 1.
Fig. 4 shows a schematic view of a second step in the printing operation in accordance with an embodiment of the present invention.
Figs. 5A and B show an embodiment of the second mould part and the base mould part, respectively in accordance with the present invention.
Fig. 6 shows a cross-section through an embodiment of a multicavity mould formed from the mould parts of Fig. 5.
Fig. 7 is a cross-section through a stack of base mould parts of Fig. (.

### DESCRIPTION OF THE ILLUSTRATIVE EMBODIMENTS

The present invention will be described with reference to certain embodiments and certain drawings but the present invention is not limited thereto but only by the claims.

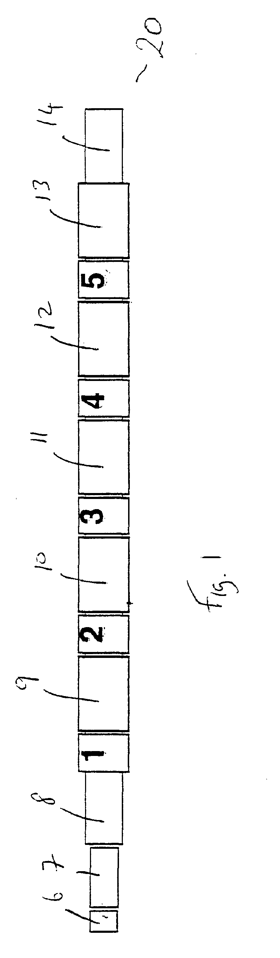

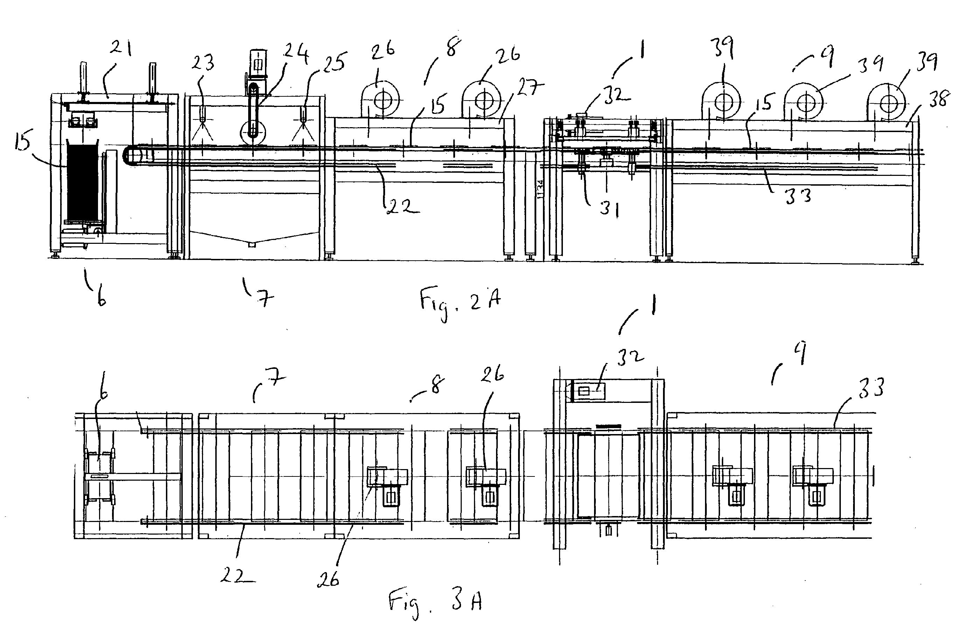

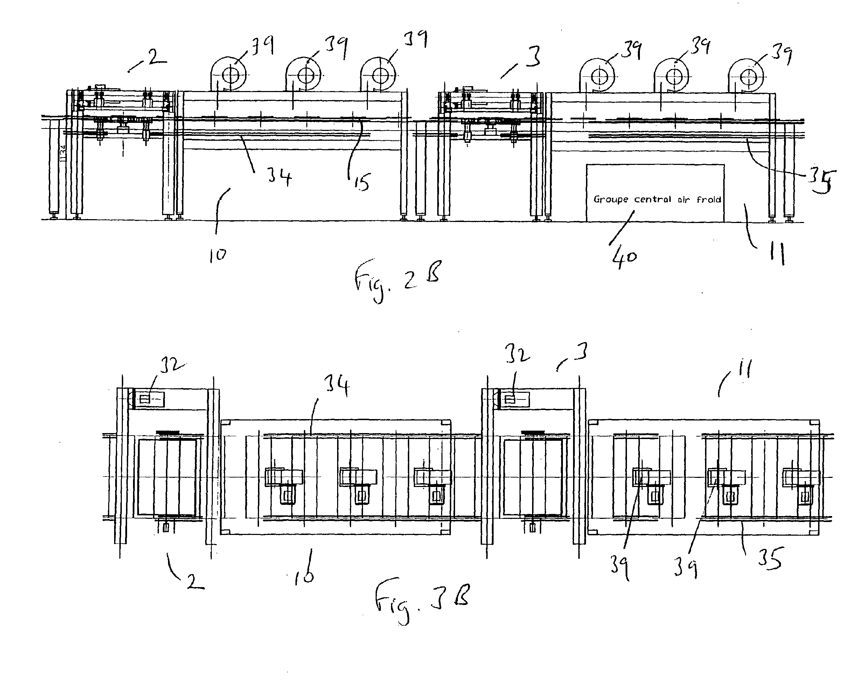

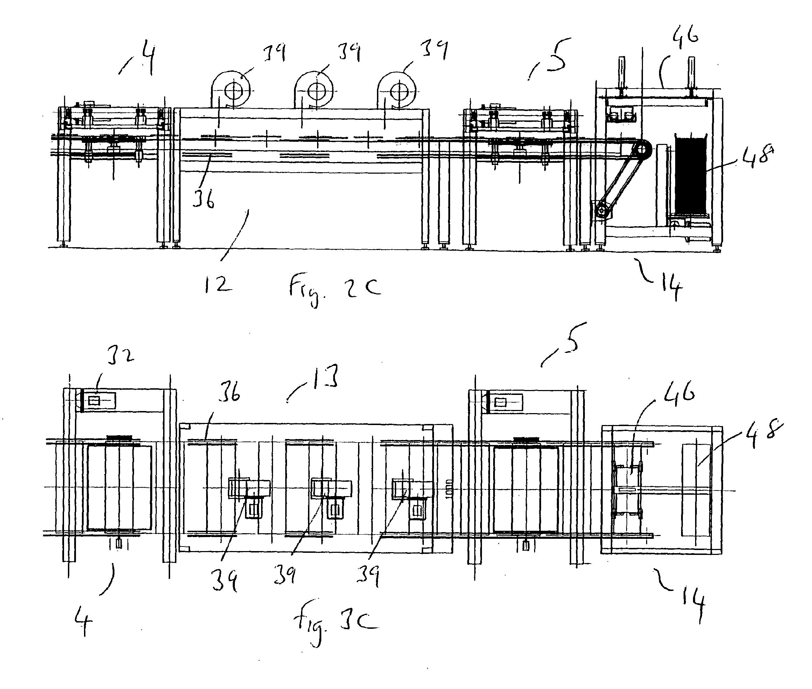

Fig. 1 shows a schematic top view of the printing machine 20 according to an embodiment of the present invention wherein the confectionery product is printed indirectly via a mould. Figs. 2A, B, C show side view details and Figs. 3A, B, C show top view details of respective parts of machine 20. The machine 20 comprises a series of at least two and preferably more, e.g. five printing stations 1, 2, 3, 4, 5, e.g. screen printing stations. Four colour printing (CYMK) plus one special or "spot colour" can be printed with this machine 20 with a resolution of about 85 dots per inch. By adding more printing stations, more printing layers may be applied. Flat mould base portions 15 are stacked in a stacking system 6 at the input to the machine 20. The stacking system 6 is preferably designed so that an upper printing surface of each mould base portion 15 is protected by the mould base portion above it in the stack and is located at a vertical distance therefrom so that there is a gap between the upper printing surface of one mould base portion 15 and the lowermost surface of the mould base portion above. It is also preferred if each mould base portion 15 is designed so that the bottom surface thereof is concave. For example, the bottom surface may be defined by an outer raised rim which locates into a depression around the upper rim of the adjacent lowest mould base portion 15 on which it rests. By this means the upper printing surface of each mould portion 15 is spaced from the bottom surface of the next uppermost mould base portion 15 in the stack 6 and is also protected from dust ingress by the closely fitting lower outer rim of the next uppermost mould base portion 15. The mould base portions 15 are preferably made from a material which is hygienic, can be easily washed, is relatively robust, is not attacked by printing inks and to which printing inks adhere slightly bit not strongly and can also be provided with a perfectly smooth and glossy surface for printing. Suitable materials include metals but most preferred is a plastic such as a polycarbonate or high density polyethylene.

A robot 21 takes each mould base portion 15 from the top of the stacking system 6 and places it onto a conveyor 22 which takes the mould base portion 15 through a washing section 7 and a drying unit 9 before entering the first printing station 1. The washing section 7 may include one or more water sprays 23 which may include detergent and optionally a brush cleaner 24 which may be driven by a motor. After washing and scrubbing, each mould part 15 may be rinsed with clean water from a spray 25. The drying unit 9 may include one or more hot air fans 26 located in a tunnel 27 mounted around the conveyor 22.

Preferably, each printing station 1-5 includes a precision X-Y location table 31 placed below the printing head 32 for accurately placing each mould part 15 below the actual printing head 32, for example, in accordance with reference marks on each mould part 15. Preferably, a plurality of images are printed onto the mould base portion 15 in a regular array simultaneously at one printing head 1-5. For this purpose a screen printing stencil may be provided with a plurality of suitable images arranged within it. The image is printed directly onto the flat upper printing surface of the mould base portion 15. A suitable image size is 720 x 450 mm which may be subdivided into smaller images. Each stencil may be provided with a heater to maintain the ink at any predetermined temperature during printing, e.g. between 20 and 50 ± 1°C. During the printing process the mould base portion 15 is stationary but other conveyors in the machine 20 such as the conveyor 22 of the washing and drying sections 7 and 8 may continue to transport mould base portions 15. For this purpose, the movement of each conveying device 22 and the X-Y locator 32 at each printing station 1-5 is independently settable and controllable. Further, the X-Y locator 32 may receive a mould base portion 15 and lift it towards the relevant printing head 1-5 thus disengaging the mould portion 15 from its conveyor. Hence, there is no need to stop the conveyors during the printing step.

Each printing station 1-4 has an ink drying or solidifying section 9, 10, 11, 12 located downstream thereof. The last printing head 5 may optionally have a drying or solidifying section 13, but this may be omitted and the last print may dry or solidify after the mould base portion 15 has been removed from the machine 20. In each drying or solidifying section 9-12 the mould base portion 5 printed in the previous station is transported via a respective conveyor 33, 34, 35, 36 to the next station. Each conveyor 33-36 may be surrounded by a tunnel 38. The tunnel 38 may be provided with active solidifying or drying devices, for example, heating or cooling devices such as fans 39 blowing heated or cooled air may be located in the tunnel 38 to dry or solidify the ink. Preferably, the speed of the conveyors 33-36 in the drying or solidifying sections 9-12 is individually settable in such a way that by the time a mould base portion 15 reaches the next station, the ink printed in the previous printing station is dry or solidified. The terms dry and solidify indicate that the present invention is not limited to the type of ink used. Some printing inks used with confectionery are based on chocolate and need to be melted before application. With such an ink it should be solidified before the next ink is applied. On the other hand some inks used with confectionery contain solvents such as water but more often ethanol. With such inks the solvent must be driven off before the next printing step. So, for instance, if the ink is to be solidified the ink should be cooled after printing. For this purpose a cooling apparatus 40 may be provided for providing cooling air to fans 39. On the other hand, if the ink contains a solvent it may be preferred to blow hot air through fans 39. This may be achieved by an electrical heater in each fan 39. Preferably, machine 20 is able to provide either hot or cold air to fans 39.

Preferably, a different colour ink is applied at each printing station 1-5. An output station 14 may be provided for removing the printed mould base portions 15 from the machine 20. For example, a robot 46 may unload each mould base portion 15 from the last conveyor and deposit it on a stack 48. Due to the form of the mould base portions this may be done without damaging the printed images which are protected from mechanical damage and dust as described for stack system 6.

The advantage of independent setting of the speed of the conveyors is a reduction in the number of mould base portions 15 which are required or are work in process. Let us assume that there are five printing heads with 3 metres of conveyor between each head. Further, let us assume that each printing operation takes 20 seconds and the first printing head puts on a thick coating of ink which takes 3 minutes to dry. The conveyor leaving the first printing head should run at 1 meter per minute so that the time taken to reach the next printing head is three minutes. If each mould portion in 720 mm long, there will be about 4 mould portions 15 on the first conveyor at any one time. If all the conveyors go at the same speed, then there will a total of 4 x 4 or 16 mould portions 15 in the machine at any one time (discounting the last conveyor). However, if the drying or solidifying times are shorter for the later printing heads, let us say only 20 seconds, then each subsequent conveyor can be driven at up to 9 meters per minute. A new mould portion 15 arrives at the second printing head every 45 seconds, within this time the second head can print and transfer the mould portion to the next head. This is true for each further printing head, so there are four mould portions on the first conveyor and then one further mould portion 15 per printing head making a total of 8 mould portions in the machine at any one time. This is only 50% of the number used if the conveyor were to at constant speed throughout the machine. Hence, the number of mould portions 15 in circulation can be significantly reduced. This is an important aspect when a printing error is discovered. Often such a printing error may be determined only on the final product. In the meantime many mould portions 15 may have been wrongly printed. By reducing the number of mould portions 15 in work in progress, the loss of total production time (which includes washing and drying all mould portions wrongly printed) can be reduced.

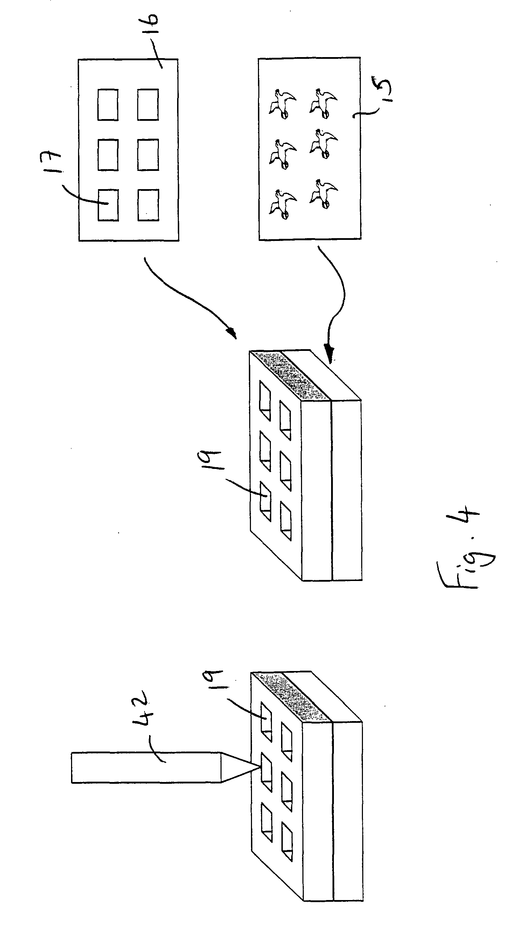

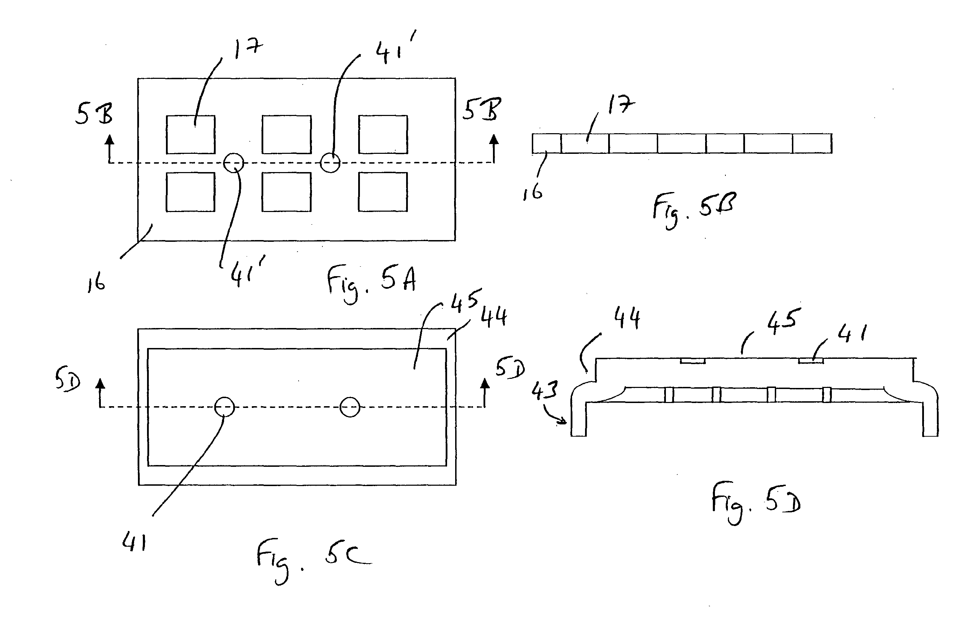

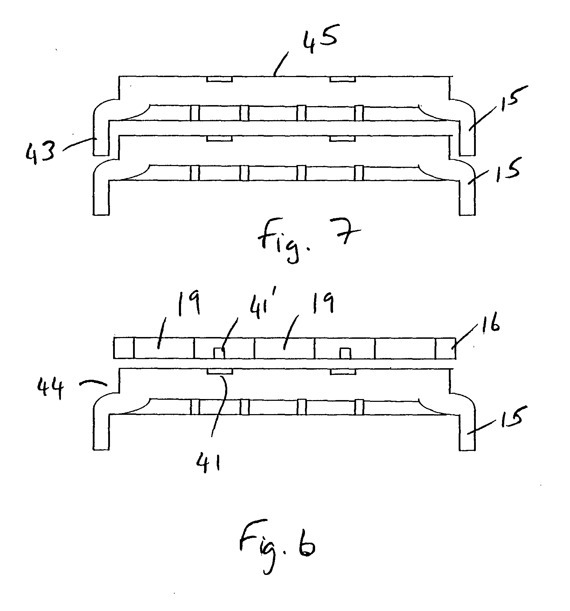

The next stage of printing is shown schematically in Fig. 4. Fig. 6 shows a side view cross-section of an embodiment of a multicavity mould 18 and Figs. 5C and D and Figs. 5A and B show an embodiment of the base mould part 15 and the second mould part 16, respectively. A bottomless second mould part 16 is placed on each first mould base portion 15 to form a mould 18. Each bottomless mould part 16 preferably has a plurality of holes 17 which form mould cavities 19 when the second mould part 16 is placed on the upper surface of the first mould base portion 15 (Fig. 6). The holes 17 coincide with the images printed onto mould base portion 15. The two parts 15 and 16 may be removably attached to each other by providing magnets and pole pieces 41 and 41' in respective ones of the first or second mould parts 15, 16, for example at neutral positions of the second mould part 16. The magnets or pole pieces 41, 41' located in the mould base portion 15 may be used as printing reference marks for aligning each mould base portion 15 with the printing head using the X-Y locator in each printing station. Other removable mechanical securing methods are included within the scope of the present invention. The bottom surface of mould base portion 15 is preferably concave and has an outer, thin rim 43 raised perpendicularly to the upper printing surface 45. This locates into a depression 44 which runs around the circumference of the upper surface of base mould part 15 when two of these are stacked (Fig. 7). This allows two mould base portions 15 to be stacked in system 6 with the upper printing surface 45 of mould base portion 15 protected from dust and mechanical damage while the lower surface of the upper mould base portion 15 is spaced from the upper printing surface 45 of the mould base portion lying underneath.

One or more confectionery materials such as chocolate are then dispensed into each mould cavity 19 of the completed mould 18 from a dispensing unit 42 and the material allowed to set or processed in some suitable manner, e.g. baked. The confectionery items are then removed from the cavities 19 by separating the upper mould part 16 and the mould base portion 15. Each item is printed with an image transferred from the mould base portion 15. The mould base portions 15 are returned to the stack system 6 whereas the upper mould parts 16 may be separately washed and stored for use again.

In the above embodiment the upper surface of the base mould part 15 was flat. There may be occasions when a three-dimensionally profiled relief is required on the finished confectionery item. In this case the inverse 3-D shape may be formed in the upper surface of mould base portion 15 and this uneven surface may be unsuitable for screen printing. In this case the ink image may be transferred to the upper surface of mould base portion 15 at each printing station by a dabbing technique using a pad. Dabbing techniques are known to the skilled person. In a first step, ink is applied according to a predetermined pattern onto a cliché. Use may made of a substantially flat cliché with the predetermined pattern etched into its surface. Ink may applied by means of a squeegee to the upper surface of the cliché and then scraped with a suitable doctor blade to leave ink only in the etched portions. A soft resilient pad with an ink resistant surface is pressed onto the inked cliché to take up the ink pattern. The ink is then applied to the upper surface of the mould base portion 15 according to the predetermined pattern by pressing the pad against the upper surface. Before transferring more ink to the next mould base portion 15 the pad may be cleansed.

Preferably, the pad has a convex surface so that when transferring ink onto the upper surface of the mould base portion 15, the surface area of contact between the pad and the surface increases gradually as the pad is pressed further down. A pad having a spherical convex printing surface is appropriate thereto. In this embodiment the mould base portion 15 may be a complete mould and the second mould part may be dispensed with if the cavity in the mould is larger than the pad and the image to be printed is smaller than the cavity. Hence, in accordance with embodiments of the present invention it is not necessary the mould parts 15 and/or 16 are re-used. Other printing methods may be used in accordance with the present invention, e.g. one or more printing stations may include an ink jet printing head.

While the invention has been shown and described with reference to preferred embodiments, it will be understood by those skilled in the art that various changes or modifications in form and detail may be made without departing from the scope and spirit of this invention. For instance, a single conveying device may be used for conveying each mould part 15 from the first to the last printing station. The conveying device is adapted so that a fine adjusting X-Y table lifts up the mould part from the conveying device at each printing station and finely adjusts its position ready for printing. After printing the mould part is lowered onto the conveying device for transport to the next printing station.

## Claims

1. A method of printing confectionery products using a printing machine having at least a first and a second printing station and a third station; the method comprising the steps of: sequentially conveying a first mould portion from the first printing station to the second printing station and then to the third station; printing onto the mould portion at each printing station; drying or solidifying the printing on the mould portion downstream of the first and second printing stations, respectively; and independently setting the speed of conveyance so that the time taken to convey the first mould portion from the first printing station to the second printing station and from the second printing station to the third station is at least sufficient to dry or solidify the printing applied at the first and second printing stations, respectively.

2. A method of printing confectionery products using a printing machine having at least a first and a second printing station, and a third station; the method comprising the steps of: sequentially conveying a first mould portion from the first printing station to the second printing station and then to the third station; printing onto the mould portion at each printing station;
drying or solidifying the printing on the mould portion downstream of the first and second printing stations, respectively; and finely adjusting the position of the mould portion at each printing station independently of the conveyance of the mould portion to the next station.

3. The method according to claim 1 or 2, further comprising printing the first mould portion with a plurality of similar images at each printing head simultaneously.

4. The method according to any of claims 1 to 3, wherein the printing steps are carried out by screen printing

5. The method according to the previous claims, further comprising the step of using an X-Y locator at each printing station for accurate placing and adjustment of the first mould portion with respect to the printing station.

6. The method according to any previous claim, further comprising the steps of washing and drying the first mould portions before they are conveyed to the first printing station.

7. A printing machine for confectionery products comprising at least a first and a second printing station and a third station;
a first and second conveying device for conveying first mould portions one-by-one from the first to the second printing station, and from the second to the third station, respectively; first and second drying or solidifying sections each placed downstream of the first and second printing stations, respectively; and a control system for independently setting the speeds of the first and second conveying devices.

8. A printing machine for confectionery products comprising at least a first and a second printing and a third station; a conveying device for conveying first mould portions one-by-one from the first to the second printing station and from the second to the third station; and a fine position adjustment mechanism at each printing station, the fine adjustment mechanism being adapted to adjust the mould portion independently of the conveying by the conveying device.

9. The printing machine according to claim 7 or 8, further comprising a washing and dying unit for washing and drying each first mould portion before it is supplied to the first printing head.

10. The printing machine according any of claims 7 to 9, further comprising a stacking system for stacking the first mould portions in a vertical stack of horizontal first mould portions in such a way that an upper printing surface of each first mould portion is covered in a non-touching manner by the next adjacent first mould portion higher in the stack.
